## Europäisches Patentamt

## European Patent Office

## Office européen des brevets

(11) Veröffentlichungsnummer: **0 397 970**

**A1**

(12) # EUROPÄISCHE PATENTANMELDUNG

(21) Anmeldenummer: **90103306.8**

(22) Anmeldetag: **21.02.90**

(51) Int. Cl.⁵: **G12B 5/00**

(30) Priorität: **13.05.89 DE 3915679**

(43) Veröffentlichungstag der Anmeldung:
**22.11.90 Patentblatt 90/47**

(84) Benannte Vertragsstaaten:
**AT CH DE FR GB IT LI**

(71) Anmelder: **DR. JOHANNES HEIDENHAIN GMBH**
**Dr.-Johannes-Heidenhain-Strasse 5 Postfach 1260**
**D-8225 Traunreut(DE)**

(72) Erfinder: **Ernst, Alfons, Dipl.-Ing.**
**Traunring 62**
**D-8225 Traunreut(DE)**

(54) **Positionsmesseinrichtung mit einer Justiervorrichtung.**

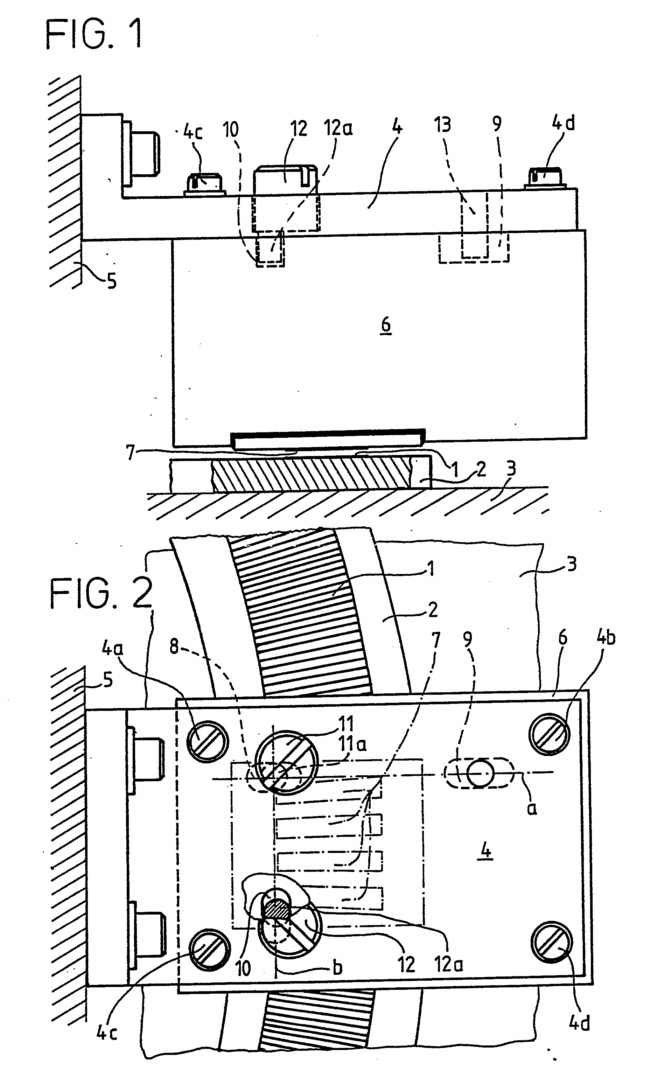

(57) Gemäß Figur 2 kann eine Abtasteinrichtung (6) einer Positionsmeßeinrichtung mittels einer Justiervorrichtung (4) relativ zur Meßteilung (1) der Positionsmeßeinrichtung justiert werden. Dazu weist die Abtasteinrichtung (6) drei Langlöcher (8, 9, 10) auf, deren Längsachsen "a" und "b" senkrecht zueinander verlaufen. In eines der Langlöcher (9) greift ein zylindrischer Stift (13) ein, der in der Justiervorrichtung (4) fixiert ist. Mittels zwei Justierschrauben (11, 12), die exzentrische Ansätze (11a, 12a) aufweisen und die in die Langlöcher (8, 10) eingreifen, kann die Abtasteinrichtung (6) in radialer und in tangentialer Richtung verstellt werden, wobei die Abtasteinrichtung (6) bzw. deren Abtastfelder (7) exakt zur Meßteilung (1) der Positionsmeßeinrichtung justiert werden.

FIG. 2

EP 0 397 970 A1

## Positionsmeßeinrichtung mit einer Justiervorrichtung

Die Erfindung bezieht sich auf eine Positionsmeßeinrichtung gemäß dem Oberbegriff des Anspruches 1.

Bei inkrementalen Positionsmeßeinrichtungen, bei denen die Meßteilung als periodisches Gitter ausgebildet ist, wird diese von einer Abtasteinrichtung fotoelektrisch abgetastet, die ebenfalls eine entsprechende Gitterteilung aufweist. Die Gitter der Meßteilung und der Abtasteinrichtung werden zueinander justiert, um die Abtastsignale zu optimieren. Wenn die Gitter parallel zueinander in zwei Ebenen angeordnet sind und die Gitter unter einem kleinen Winkel zueinander stehen, nennt man diese Justierung "Moire"-Einstellung. Als Beispiel für eine derartige Justierung sei auf den Gegenstand verwiesen, der in der DE-PS 10 40 268 beschrieben ist. Diese "Moire"-Justierung muß sehr präzise erfolgen, soll dauerhaft sein, aber dennoch keinen großen Aufwand erfordern.

Der Erfindung liegt die Aufgabe zugrunde, eine Positionsmeßeinrichtung der genannten Gattung zu schaffen, bei der mittels einer Justiervorrichtung die Abtasteinrichtung in einer Ebene parallel zur Ebene der Meßteilung exakt justiert werden kann und die die Herstellungskosten nicht wesentlich erhöht.

Erfindungsgemäß wird diese Aufgabe durch eine Positionsmeßeinrichtung mit den Merkmalen des Anspruches 1 gelöst.

In den Unteransprüchen sind vorteilhafte Ausführungsbeispiele angegeben.

Die besonderen Vorteile der Erfindung liegen darin, daß sie sowohl bei Winkel- als auch bei Linearmeßeinrichtungen einsetzbar ist, daß nach der Justierung eine äußerst starre Fixierung der Abtasteinrichtung gegeben ist, da auf Zug- und/oder Druckfedern verzichtet wurde, daß sie einfach herstellbar und leicht zu handhaben ist.

Mit Hilfe der Zeichnungen soll anhand eines als Winkelmeßeinrichtung ausgebildeten Ausführungsbeispieles die Erfindung noch näher erläutert werden.

Es zeigt

Figur 1 eine ausschnittsweise Seitendarstellung einer an einer Maschine montierten Winkelmeßeinrichtung und

Figur 2 eine Draufsicht auf die Winkelmeßeinrichtung gemäß Figur 1.

Die Figuren 1 und 2 zeigen dieselbe Winkelmeßeinrichtung, deshalb sind in den beiden Figuren gleiche Bauelemente mit gleichen Bezugszeichen versehen.

An einer nicht näher zu spezifizierenden Maschine ist die Meßteilung 1 mittels eines Trägerkörpers 2 am Rotor 3 der Maschine befestigt. Über eine Justiervorrichtung 4 ist mit Befestigungsschrauben 4a, 4b, 4c, 4d am Stator 5 der Maschine eine Abtasteinrichtung 6 befestigt, die die Meßteilung 1 abtastet, wenn sich Rotor 3 und Stator 5 relativ zueinander bewegen. Zur Abtastung der Meßteilung 1 weist die Abtasteinrichtung 6 ebenfalls eine Gitterteilung in Form von vier Abtastfeldern 7 auf, wie im einschlägigen Stand der Technik hinlänglich beschrieben ist.

Zwischen der Meßteilung 1 und den Abtastfeldern 7 muß die eingangs beschriebene Justierung erfolgen. Um die Justierung möglichst einfach zu gestalten, sind in dem der Justiervorrichtung 4 zugewandten Bereich der Abtasteinrichtung 6 drei Langlöcher 8, 9 und 10 angebracht. Zwei der Langlöcher, 8 und 9, haben eine gemeinsame Längsachse "a". Senkrecht zu dieser Längsachse "a" der Langlöcher 8 und 9 verläuft die Längsachse "b" des dritten Langloches 10.

In der Justiervorrichtung 4 sind Justierschrauben 11 und 12 mit hinreichender Selbsthemmung angeordnet, die jeweils einen exzentrischen Ansatz 11a und 12a tragen und die in die Langlöcher 8 bzw. 10 eingreifen. Ferner greift ein zylindrischer Stift 13 in das dritte Langloch 9 ein, dessen Längsachse "a" mit der Längsachse "a" des Langloches 8 zusammenfällt, oder aber ihr zumindest parallel liegt.

Nach Lösen der Befestigungschrauben 4a, 4b, 4c, 4d kann die Abtasteinrichtung 6 wie folgt justiert werden:

Für die Justierung in radialer Richtung wird die Justierschraube 12 gedreht. Deren exzentrischer Ansatz 12a, der paßgenau zwischen den Schmalseiten des Langloches 10 liegt, nimmt die Abtasteinrichtung in radialer Richtung mit. Die Längsachse "b" des Langloches 10 verlagert sich, mit diesem parallel, in radialer Richtung. Die senkrecht zur Langlochachse "b" verlaufende Langlochachse "a" (sie verläuft demgemäß in radialer Richtung) bildet die Führung für die Abtasteinrichtung 6 in radialer Richtung.

Für die Justierung in tangentailer Richtung wird die Justierschraube 11 mit ihrem exzentrischen Ansatz 11a gedreht. Das Langloch 10 mit dem exzentrischen Ansatz 12a der Justierschraube 12 bildet dabei die tangentiale Führung der Abtasteinrichtung 6. Um die Abtasteinrichtung 6 zu fixieren, ist ein Drehpunkt vorhanden, der durch den zylindrischen Stift 13 und dessen Langloch 9 gebildet wird. Diese Paarung von Stift 13 und Langloch 9 bewirkt, daß bei tangentialer Justierung der Abtasteinrichtung 6 wegen der Fesselung bzw. Führung durch das Langloch 10 und den Ansatz 12a sowie der erwähnten Paarung Langloch 9/Stift 13 die Abtasteinrichtung 6 eine geringe Schwenkbewegung macht, so daß sich die Langloch-Längsachsen "a" und "b" geringfügig verlagern, aber weiterhin senkrecht zueinander stehen. Die Abtastfelder 7 der Abtrasteinrichtung 6 werden auf diese Weise genau zur Meßteilung 1 ausgerichtet. Wenn dieser Vorgang beendet ist, wird die Abtasteinrichtung 6 mit den Befestigungsschrauben 4a, 4b, 4c, 4d in der richtigen Position befestigt.

Es liegt im Rahmen der Erfindung, die Langlöcher 8, 9, 10 durch andere Führungsbahnen, beispielsweise Linearführungen zu ersetzen. Selbstverständlich ist auch eine umgekehrte Anordnung der Langlöcher und der Justierschrauben möglich, indem die Langlöcher in der Justiervorrichtung und die exzentrischen Justierschrauben in der Abtasteinrichtung vorgesehen sind.

## Ansprüche

1. Positionsmeßeinrichtung mit einer Justiervorrichtung für eine Abtasteinrichtung einer Meßteilung, wobei die Justiervorrichtung eine Justierung der Abtasteinrichtung in einer Ebene parallel zur Meßteilungsebene ermöglicht, dadurch gekennzeichnet, daß in der Abtasteinrichtung (6) wenigstens zwei Führungsbahnen (8, 9, 10) vorgesehen sind, deren Längsachsen "a" und "b" quer zueinander verlaufen, und daß in den quer zueinander verlaufenden Führungsbahnen (8, 9, 10) wenigstens zwei in der Justiervorrichtung (7) exzentrisch gelagerte Ansätze (11a, 12a) angreifen, durch deren voneinander unabhängige Verstellung die Abtasteinrichtung 6 justierbar ist.

2. Positionsmeßeinrichtung nach Anspruch 1, dadurch gekennzeichnet, daß die Führungsbahnen durch Linearführungen (8, 9, 10) gebildet werden, deren Längsachsen "a" und "b" senkrecht zueinander verlaufen.

3. Positionsmeßeinrichtung nach Anspruch 2, dadurch gekennzeichnet, daß die Linearführungen durch drei Langlöcher (8, 9, 10) gebildet werden.

4. Positionsmeßeinrichtung nach Anspruch 1, dadurch gekennzeichnet, daß ein Langloch (9) und ein Stift (13) einen Drehpunkt bilden, um den die Abtasteinrichtung (6) geringfügig schwenkbar ist.

FIG. 1

FIG. 2

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| X | <u>DE - A1 - 3 637 126</u><br>(JENOPTIK)<br>* Fig. 1 *<br>---- | 1-4 | G 12 B 5/00 |

|  |  |
|---|---|
|  | RECHERCHIERTE SACHGEBIETE (Int. Cl.⁵) |
|  | G 01 D   3/00<br>G 01 D 11/00<br>G 12 B   5/00 |

Der vorliegende Recherchenbericht wurde für alle Patentansprüche erstellt.

| Recherchenort | Abschlußdatum der Recherche | Prüfer |
|---|---|---|
| WIEN | 31-07-1990 | KUNZE |

KATEGORIE DER GENANNTEN DOKUMENTEN
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82